# EUROPÄISCHE PATENTSCHRIFT

(11) **EP 2 630 702 B1**
(45) Veröffentlichungstag und Bekanntmachung des Hinweises auf die Patenterteilung: **21.09.2016**
(21) Anmeldenummer: 11767259.2
(22) Anmeldetag: 11.10.2011
(51) Int. Cl.: H01R 39/27, H01R 39/38, H01R 39/415, H01R 39/58

(54) **KOHLEBÜRSTE MIT ABSCHALTVORRICHTUNG**
CARBON BRUSH WITH DISCONNECTION APPARATUS
BALAI DE CHARBON COMPORTANT UN DISPOSITIF DE COUPURE

(30) Priorität: 22.10.2010 DE 102010042804
(43) Veröffentlichungstag der Anmeldung: 28.08.2013
(73) Patentinhaber: Robert Bosch GmbH, 70442 Stuttgart (DE)
(72) Erfinder: LUTZ, Manfred, 70794 Filderstadt (DE)
(86) Internationale Anmeldenummer: PCT/EP2011/067706
(87) Internationale Veröffentlichungsnummer: WO 2012/052319

(56) Entgegenhaltungen:
- WO-A1-02/052685
- DE-A1- 2 135 617
- DE-A1- 2 801 839
- GB-A- 118 520
- GB-A- 250 665
- US-A- 2 986 666

## Beschreibung

### Stand der Technik

Die Erfindung geht aus von einer Kohlebürste mit Abschaltvorrichtung nach dem Oberbegriff des Anspruchs 1.

Es sind Kohlebürsten dieser Art bekannt (DE 1 679 529 U1), bei denen der Druckfederkörper aus einer zylindrischen Schraubenfeder besteht, die zum Erreichen einer möglichst geringen Gesamtlänge des Systems der Abschaltvorrichtung und eines möglichst großen Verschleißweges des Bürstenkörpers höchstens so weit vorgespannt und zusammengedrückt werden kann, dass deren zylindrische Windungen aufeinander liegen und die Feder auf Block vorgespannt ist. Dies führt somit zu einer relativ großen axialen Länge eines solchen Druckfederkörpers. Aufgrund dessen verbleibt ein kleiner nutzbarer Verschleißweg des Bürstenkörpers, der sich aus dem Verhältnis des möglichen theoretischen Verschleißweges der Kohlebürste zur Länge der Abschaltvorrichtung ergibt. Ein geringer Verschleißweg als reale Nutzlänge des Bürstenkörpers erfordert einen frühen Austausch der Kohlebürsten, wenn diese den zulässigen Verschleißweg überschritten haben. Ein weiterer Nachteil liegt darin, dass zylindrische Schraubenfedern als Druckfederkörper eine geringe Biegesteifigkeit aufweisen. Während des Abschaltvorganges, wenn der Druckfederkörper den Bürstenkörper bereits vom Kommutator eines Elektromotors abgehoben hat und den Stromkreis unterbrochen hat, trudelt der Elektromotor noch aus. Dieses Auslaufen kann bei ungebremsten Maschinen im Leerlauf 5 bis 15 sec. dauern. Während dieser Zeit wirken über den Kontakt des Abschaltkörpers mit dem rotierenden Kommutator Querkräfte auf den Druckfederkörper, die zu starker Schiefstellung der zylindrischen Schraubenfeder und zum Ausreißen des Abschaltkörpers infolge dieser starken Schiefstellung führen können.

Dokument DE-A-2135617 offenbart die Merkmale des Oberbegriffs des unabhängigen Anspruchs 1.

### Offenbarung der Erfindung

Die erfindungsgemäße Kohlebürste mit Abschaltvorrichtung hat den Vorteil, dass durch diese aufgrund der Verkürzung der Länge der Abschaltvorrichtung ein größerer Verschleißweg bei gleicher Länge des Bürstenkörpers erreicht wird. Mit Vorzug wird die Axiallänge des Druckfederkörpers verkürzt. Die Systemlänge der Abschaltvorrichtung wird dadurch verringert. Dies führt zu wirtschaftlichen Vorteilen sowohl für den Benutzer als auch für den Hersteller von Elektromotoren sowie von Elektrogeräten für Haushalt, Handwerk od. dgl., bei denen Elektromotoren mit erfindungsgemäßen Kohlebürsten zum Einsatz kommen. Aufgrund der Vergrößerung der nutzbaren Verschleißlänge der Kohlebürste kann ein Elektrogerät beim Benutzer länger bis zum Zeitpunkt des kontrollierten Abschaltens durch die Abschaltvorrichtung betrieben werden. Dadurch werden die notwendigen Serviceintervalle und Nutzungszeiten bis zum Zeitpunkt des Abschaltens verlängert. Es entfallen Liegezeiten, die für den Austausch der Kohlebürsten erforderlich sind. Die Gesamtnutzungsdauer eines Elektrogerätes kann somit erhöht werden. Der Benutzer eines Elektrogerätes kann sich auf eine längere, sichere Funktionsweise einrichten. Vorteilhaft sind ferner verringerte Kosten für Ersatzteilkohlebürsten, da über die Gesamtlebensdauer eines Elektrogeräts weniger Ersatzteile benötigt werden. Es werden zuverlässig Schäden am Kommutator des Elektromotors, an den Kohlebürsten und an anderen Bauteilen des Elektrogerätes vermieden und damit dadurch bedingte Reparaturkosten.

Durch die in den weiteren Ansprüchen aufgeführten Maßnahmen sind vorteilhafte Weiterbildungen und Verbesserungen der in Anspruch 1 angegebenen Kohlebürste möglich.

Eine vorteilhafte Ausgestaltung der Kohlebürste sieht vor, dass der Druckfederkörper aus zumindest einer Feder mit mehreren Federwindungen gebildet ist, die zumindest im vorgespannten, zusammengedrückten Zustand unter Verkürzung zumindest teilweise ineinander liegen. Die ineinander liegenden Federwindungen führen zu einer reduzierten Länge des Druckfederkörpers und zu einer kompakten Bauweise sowie zu höherer Biegesteifigkeit, durch die der Druckfederkörper Querkräften ohne übermäßige Verformung besser standhalten kann.

Von Vorteil kann es z. B. sein, wenn die Federwindungen in einer Axialrichtung abgestufte oder kontinuierlich abnehmende Durchmesser aufweisen, wobei zumindest teilweise die kleineren Federwindungen in den folgenden größeren Federwindungen aufgenommen sind. Dies kann z. B. dann verwirklicht werden, wenn der Druckfederkörper als Schraubenfeder mit konusförmig oder doppelkonusförmig gewickelten Federwindungen ausgebildet ist. Durch das Eintauchen der kleinen Windungen in die immer größer werdenden Windungen des Konus wird eine Reduzierung des Bauraumes und damit der axialen Länge der Abschaltvorrichtung erreicht mit Steigerung des Verschleißweges des Bürstenkörpers bei gleicher Länge dieses. Als konische oder doppelkonische Schraubenfeder ausgebildete Druckfederkörper sind einfach und kostengünstig. Sie sind als gängige Bauteile im Handel erhältlich.

Vorteilhaft kann es ferner sein, wenn der Druckfederkörper aus zumindest einer Wickelfeder, die aus einem hochkant stehenden Flachmaterial gewickelt ist, gebildet ist. Derartige Wickelfedern sind auch unter der Bezeichnung Evolutfeder oder Topffeder bekannt und stellen ebenfalls handelsübliche Bauteile dar, die kostengünstig bereitstehen. Bei einer derartigen Wickelfeder liegen im vorgespannten zusammengedrückten Zustand die Bandwindungen zumindest im wesentlichen spiralig ineinander, wobei die Federlänge etwa auf die Breite des gewickelten Flachmaterials oder Bandes verkürzt ist, wenn die Wickelfeder komplett zusammengedrückt ist. Die Wickelfeder kann einfachkonisch oder doppelkonisch ausgebildet sein. Sie baut sehr kompakt und hat den Vorteil einer großen Biegesteifigkeit, so dass sie auch großen Querkräften ohne stärkere Schiefstellung standhalten kann.

Von Vorteil kann es sein, wenn der den Druckfederkörper und den Abschaltkörper enthaltende Hohlraum an einem Ende über eine Trennscheibe verstampft ist, über der sich diese Verstampfung aus metallischen pulverförmigen Werkstoffen befindet. Dadurch wird eine zuverlässige axiale Abstützung für den Druckfederkörper erreicht. Durch die Trennscheibe wird verhindert, dass während des Vorganges der Verstampfung Metallpulver in den Bereich des Druckfederkörpers gelangen kann, das zu Störungen während des Abschaltvorganges führen könnte.

Vorteilhaft kann es ferner sein, wenn der Hohlraum am Ende im Bereich der Verstampfung eine Aussparung mit größerem Durchmesser als der Hohlraum aufweist und in der Aussparung die Trennscheibe und ferner die Verstampfung mit vergrößerter Umfangsfläche bei reduzierter axialer Dicke aufgenommen sind. Die zur Fixierung des Druckfederkörpers vorhandene Verstampfung benötigt zur sicheren Verankerung im Bürstenkörper eine bestimmte Umfangsfläche, die durch Vergrößern des Durchmessers erreicht ist. Dadurch kann das Axialmaß der Verstampfung reduziert werden und damit die Gesamtlänge der Abschaltvorrichtung, wodurch eine weitere Steigerung der nutzbaren Verschleißlänge gegeben ist.

Von Vorteil kann es ferner sein, wenn die axialen Enden des Druckfederkörpers als ebenflächige Anlageflächen zur ebenen Anlage am Abschaltkörper am einen Ende und an der Trennscheibe am anderen Ende ausgebildet sind. Dies lässt sich in einfacher Weise durch Abschleifen der Enden des Druckfederkörpers erreichen. Dadurch kann zusätzlich Federlänge eingespart werden. Die Blocklänge der Feder wird verkürzt, ohne die Federcharakteristik zu verändern. Ferner ist durch präzise Anlageflächen der Feder am Abschaltkörper einerseits und an der Trennscheibe andererseits zusätzlich die Funktionssicherheit der Abschaltvorrichtung erhöht, da sich dadurch die Führung des Abschaltkörpers verbessert.

In vorteilhafter Weise ist der Druckfederkörper aus Metall, insbesondere aus Federstahl, gebildet.

Die Erfindung ist anhand von in den Zeichnungen dargestellten Ausführungsbeispielen in der nachfolgenden Beschreibung näher erläutert. Es zeigen jeweils in schematischer Darstellung:
- Fig. 1: einen schematischen Schnitt mit teilweiser Seitenansicht eines Teils einer Kohlebürste mit Abschaltvorrichtung gemäß einem ersten Ausführungsbeispiel bei gespanntem Druckfederkörper,
- Fig. 2: einen schematischen Schnitt der Kohlebürste in Fig. 1 bei entspanntem Druckfederkörper,
- Fig. 3: eine schematische perspektivische Ansicht des Druckfederkörpers in Fig. 1 und 2,
- Fig. 4: einen schematischen Schnitt mit teilweiser Seitenansicht eines Teils einer Kohlebürste mit Abschaltvorrichtung gemäß einem zweiten Ausführungsbeispiel bei gespanntem Druckfederkörper,
- Fig. 5: einen schematischen Schnitt der Kohlebürste in Fig. 4 bei entspanntem Druckfederkörper,
- Fig. 6: einen schematischen Schnitt eines Teils einer Kohlebürste mit Abschaltvorrichtung gemäß einem dritten Ausführungsbeispiel,
- Fig. 7: einen schematischen Schnitt mit teilweiser Seitenansicht eines Teils einer Kohlebürste mit Abschaltvorrichtung gemäß einem vierten Ausführungsbeispiel bei gespanntem Druckfederkörper,
- Fig. 8: einen schematischen Schnitt der Kohlebürste in Fig. 7 bei entspanntem Druckfederkörper,
- Fig. 9: eine perspektivische Ansicht eines Druckfederkörpers in Fig. 7 und 8,
- Fig. 10: eine perspektivische Ansicht eines Druckfederkörpers gemäß einem fünften Ausführungsbeispiel.

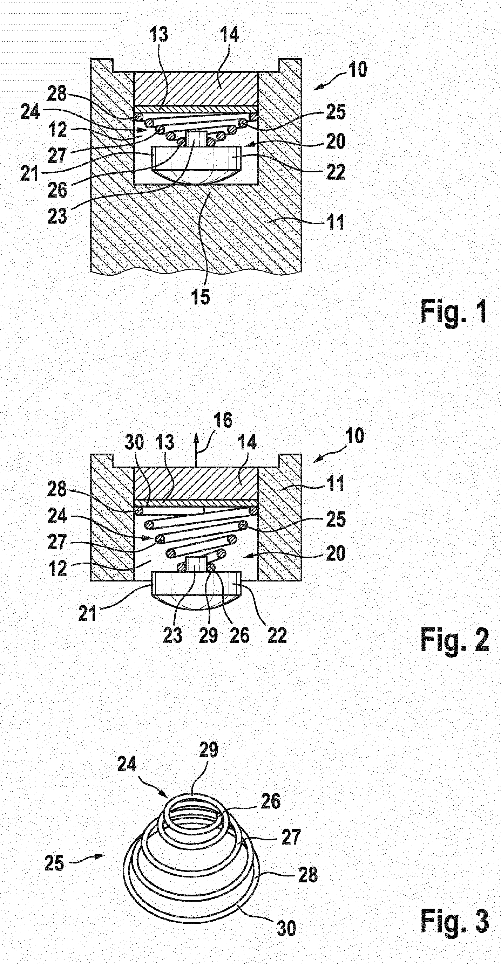

In Fig. 1 bis 3 ist ein erstes Ausführungsbeispiel einer Kohlebürste 10 mit Abschaltvorrichtung 20 gezeigt. Kohlebürsten 10 dieser Art stellen in bekannter Weise den elektrischen Kontakt zum Kommutator von Elektromotoren her, wie sie beispielsweise für Elektrogeräte für Haushalt oder Handwerk, insbesondere auch für Elektrohandwerkzeugmaschinen, eingesetzt werden. Derartige Kohlebürsten 10 bestehen aus einem Bürstenkörper 11 aus Graphit, in den üblicherweise der elektrische Anschluss eingepresst oder in sonstiger Weise damit verbunden ist. Der notwendige Anpressdruck, mit dem der Bürstenkörper 11 gegen den Kommutator des Elektromotors angedrückt wird, erfolgt durch ein Federelement z. B. in Form einer Sprialfeder (EP 0 937 320 B1).

Die Abschaltvorrichtung 20 hat den Zweck, den Kommutator des Elektromotors nach Abnutzung der Kohlebürsten vor mechanischen Beschädigungen oder Verbrennungen zu schützen. Die Abschaltvorrichtung 20 weist einen Abschaltkörper 21 aus elektrisch isolierendem Material auf, der als Stift oder Abschaltnippel ausgebildet ist. Beim gezeigten Ausführungsbeispiel weist der Abschaltkörper 21 einen gerundeten Kopf 22 mit rückseitigem Stiftansatz 23 auf. Ferner ist ein vorgespannter, den Abschaltkörper 21 federelastisch in Fig. 1 nach unten beaufschlagender Druckfederkörper 24 vorgesehen, der mit einem Ende am Abschaltkörper 21 angreift. Der Bürstenkörper 11 ist mit einem z. B. zylindrischen Hohlraum 12 versehen, in dem der Druckfederkörper 24 und der Abschaltkörper 21 gehalten sind. Der Hohlraum 12 ist am in Fig. 1 oberen Ende mit einer Trennscheibe 13, an der sich der Druckfederkörper 24 abstützt, verschlossen, wobei oberhalb der Trennscheibe 23 eine sogenannte Verstampfung 14 aus metallischen pulverförmigen Werkstoffen vorgesehen ist, über die die Abstützkräfte des Druckfederkörpers 24 aufgenommen und in den Bürstenkörper 11 geleitet werden. Die Trennscheibe 13 verhindert, dass während des Vorganges der Verstampfung Metallpulver in den Bereich des Hohlraumes 12 und damit in den Bereich des Druckfederkörpers 24 gelangen kann, das zu Störungen während des Abschaltvorganges führen könnte. In Fig. 1 ist die Abschaltvorrichtung 20 im gespannten Zustand des Druckfederkörpers 24 dargestellt, wobei der Bürstenkörper 11 nicht hinsichtlich seiner vollständigen Länge sondern abgebrochen gezeigt ist.

Durch den unvermeidlichen Abtrag aufgrund des Kontakts zwischen der Kohlebürste und dem nicht gezeigten Kommutator des Rotors eines Elektromotors findet ein Verschleiß bei der Kohlebürste 10 statt, und zwar an dem Endbereich, das dem die Abschaltvorrichtung 20 enthaltenden Ende gegenüberliegt. Nach kompletter Abnutzung der Kohlebürste 10 während des Betriebs bricht der Abschaltkörper 21 durch das im benachbarten Bereich 15 befindliche Material der Kohlebürste 10 durch und gelangt unter der Wirkung des Druckfederkörpers 24 in Berührungskontakt mit dem Kommutator. Dadurch drückt der Abschaltkörper 21 über den sich entspannenden Druckfederkörper 24 den verbleibenden Bürstenkörper 11 in Richtung des Pfeiles 16 vom nicht gezeigten Kommutator weg, wodurch der Stromfluss unterbrochen wird und der Elektromotor sich dann kontrolliert abschaltet. Zur Sicherstellung des Abschaltvorganges sollte der Bürstenkörper 11 z. B. um mindestens 1 mm vom Kommutator abheben. Dies wird durch entsprechende Vorspannung des Druckfederkörpers 24 erreicht, wobei dieser gewährleisten muss, dass die erforderliche Federkraft über den notwendigen Federweg hinweg aufgebracht wird. Aufgrund dieser Wirkung der Abschaltvorrichtung 20 werden Beschädigungen am Kommutator des Rotors eines Elektromotors vermieden, so dass es notwendig ist, vom Benutzer bzw. der Servicewerkstatt lediglich die abgenutzen Kohlebürsten 10 gegen unverbrauchte neue auszutauschen.

Man erkennt, dass die einzelnen Komponenten der Abschaltvorrichtung 20, also der Abschaltkörper 21, der Druckfederkörper 24, die Trennscheibe 13 und die Verstampfung 14, eine gewisse Gesamtlänge des Systems bedingen und den nutzbaren Verschleißweg der Kohlebürste 10 bestimmen. Die Gesamtlänge der Kohlebürste 10 ist in der Regel durch die Konstruktion des Elektrogerätes vorgegeben, so dass bei entsprechender Gesamtlänge des Systems der Abschaltvorrichtung 20 ein relativ kleiner Verschleißweg als reale Nutzlänge verbleibt. Dies erfordert dann einen frühen Austausch der Kohlebürsten 10, wenn diese den zulässigen Verschleißweg überschritten haben.

Bei der Kohlebürste 10 mit Abschaltvorrichtung 20 gemäß dem ersten Ausführungsbeispiel und gemäß der Erfindung wird ein großer Verschleißweg bei gleicher Länge des Bürstenkörpers 11 dadurch erreicht, dass der Druckfederkörper 24 zusammen mit dem Abschaltkörper 21 als Kurzbauteil geringer Axiallänge ausgebildet ist, die sich in dem gespannten Zustand des Druckfederkörpers 24 gemäß Fig. 1 zeigt. Hierbei ist der Druckfederkörper 24 aus zumindest einer Feder 25 mit mehreren Federwindungen 26, 27, 28 und weitere gebildet, wobei diese Federwindungen 26 bis 28 zumindest im vorgespannten, zusammengedrückten Zustand gemäß Fig. 1 unter Verkürzung des Druckfederkörpers 24 zumindest teilweise ineinander liegen. Man erkennt in Fig. 1, dass z. B. die kleinste Federwindung 26 in einer folgenden größeren Federwindung aufgenommen ist. Dadurch, dass die einzelnen Federwindungen 26 bis 28 und weitere zumindest teilweise ineinanderliegen, wird im vorgespannten Zustand des Druckfederkörpers 24 eine Verkürzung dieses erreicht, mit der Folge, dass eine Vergrößerung der nutzbaren Verschleißlänge der Kohlebürste 10 erzielt wird. Dadurch kann das Elektrogerät beim Benutzer länger bis zum Zeitpunkt des kontrollierten Abschaltens durch die Abschaltvorrichtung 20 betrieben werden. Es verlängern sich die notwendigen Serviceintervalle und Nutzungszeiten bis zum Zeitpunkt der Abschaltung. Ferner entfallen Liegezeiten, die für den Austausch der Kohlebürsten 10 erforderlich sind, so dass die Gesamtnutzungsdauer eines Elektrogerätes verlängert wird. Von Vorteil sind ferner verringerte Kosten für Ersatzteil-Kohlebürsten, da über die Gesamtlebensdauer eines Elektrogeräts weniger Ersatzteile benötigt werden. Durch die erreichte Verringerung der Systemlänge der Abschaltvorrichtung 20 ergeben sich somit sowohl für den Hersteller eines Elektrogeräts als auch für den Benutzer wirtschaftliche Vorteile.

Beim ersten Ausführungsbeispiel gemäß Fig. 1 bis 3 erkennt man, dass die einzelnen Federwindungen 26 bis 28 und weitere in einer Axialrichtung abgestufte oder kontinuierlich abnehmende Durchmesser aufweisen, wobei zumindest teilweise die kleinen Federwindungen unter Verkürzung der Axiallänge des Druckfederkörpers 24 in den folgenden größeren Federwindungen aufgenommen sind. Bei diesem Beispiel gemäß Fig. 1 bis 3 ist der Druckfederkörper 24 als Schraubenfeder mit konusförmig gewickelten Federwindungen 26 bis 28 und weitere ausgebildet, wobei es sich bei dieser Schraubenfeder um eine einfachkonusförmige Feder 25 handelt.

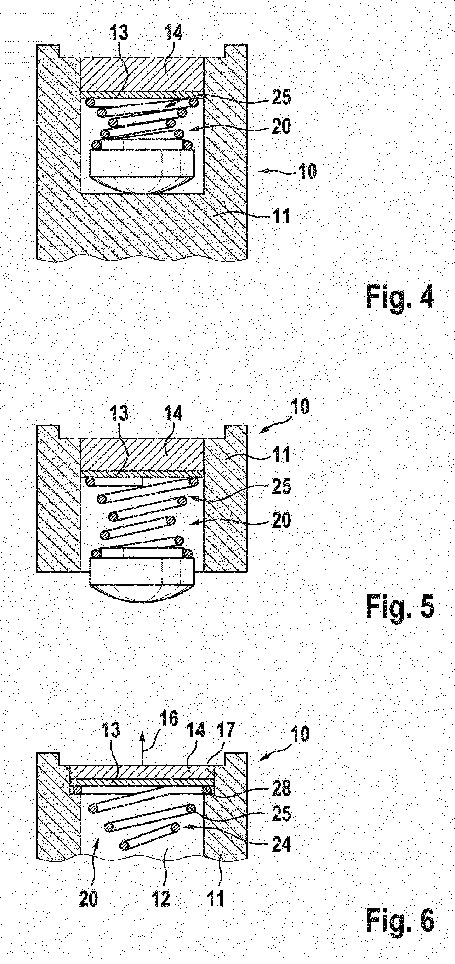

Beim zweiten Ausführungsbeispiel in Fig. 4 und 5 sind für gleiche Teile gleiche Bezugszeichen verwendet, so dass dadurch auf die Beschreibung des ersten Ausführungsbeispiels Bezug genommen ist. Das zweite Ausführungsbeispiel unterscheidet sich vom ersten Ausführungsbeispiel dadurch, dass die Feder 25 doppelkonusförmig gewickelte Federwindungen aufweist, dergestalt, dass der in Fig. 4 und 5 obere Teil der Feder 25 derart konusförmig gewickelt ist wie bei der Feder 25 in Fig. 1 bis 3 und dass sich axial daran ein gegensinnig konusförmig gewickelter Federteil einstückig anschließt, der sich aufgrund der Federwindungen in Fig. 4 und 5 nach oben hin etwa kegelförmig verjüngt, während sich der obere Teil der Feder nach unten hin etwa kegelförmig verjüngt.

Beim Ausführungsbeispiel gemäß Fig. 6 ist der Druckfederkörper 24 mit dem Ende, das dem hier nicht sichtbaren Abschaltkörper 21 gegenüberliegt, mit einer im Durchmesser größeren Windung 28 der Feder 25 in einer im Durchmesser größeren Aussparung 17 des Bürstenkörpers 11 aufgenommen und gegen Herausfallen in Richtung gegensinnig zum Pfeil 16 gesichert. In der Aussparung 17 sind auch die Trennscheibe 13 und die Verstampfung 14 enthalten. Aufgrund des größeren Durchmessers der Aussparung 17 und damit der Verstampfung 14 hat diese eine vergrößerte Umfangsfläche, so dass bei reduzierter axialer Dicke gleichwohl eine sichere Verankerung im Bürstenkörper 11 erreicht ist. Aufgrund der reduzierten axialen Dicke der Verstampfung 14 ist die Gesamtlänge der Abschaltvorrichtung 20 weiter reduziert und auf diese Weise der mögliche Verschleißweg noch weiter erhöht.

Beim ersten Ausführungsbeispiel in Fig. 1 bis 3 ist dargestellt, dass die axialen Enden 29 und 30 des Druckfederkörpers 24 als ebenflächige Anlageflächen zur ebenen Anlage sowohl am Abschaltkörper 21 am einen Ende als auch an der Trennscheibe 13 am anderen Ende ausgebildet sind. Die Feder 25 ist z. B. an beiden Enden zur Herstellung ebenflächiger Anlageflächen abgeschliffen. Durch das Anschleifen der Federenden wird eine weitere Reduzierung der Länge der Feder 25 erreicht und dadurch eine Verkürzung der Blocklänge der Feder, ohne dabei die Federcharakteristik zu verändern. In vorteilhafter Weise wird ferner eine präzisiere Anlagefläche der Feder 25 am Abschaltkörper 21 und an der Trennscheibe 13 erreicht und damit die Funktionssicherheit des Systems erhöht, da sich dadurch die Führung des Abschaltkörpers 21 verbessert.

Auch bei den anderen Ausführungsbeispielen, z. B. gemäß Fig. 4 bis 6, können die axialen Enden des Druckfederkörpers 24, insbesondere der Feder 25, z. B. durch Abschleifen mit entsprechenden ebenflächigen Anlageflächen zur ebenen Anlage versehen sein.

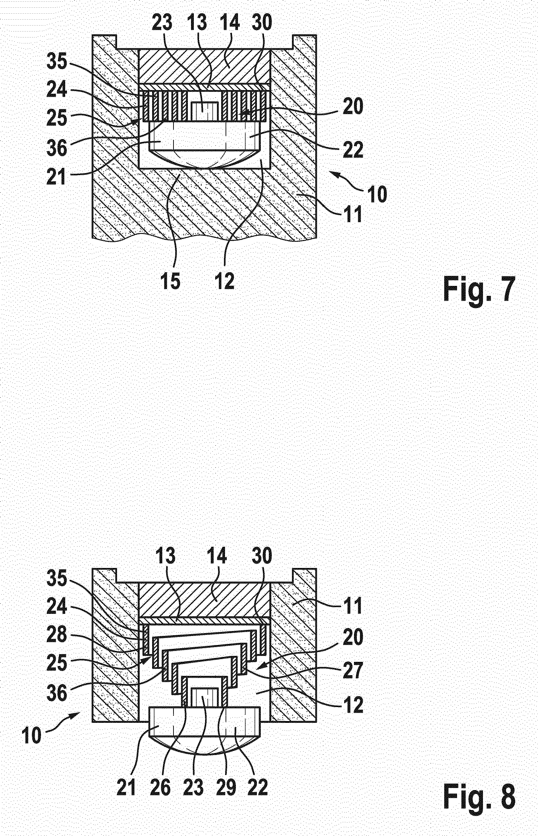

Auch beim vierten Ausführungsbeispiel gemäß Fig. 7 bis 9 sind für gleiche Teile gleiche Bezugszeichen verwendet, so dass dadurch auf die Beschreibung der vorhergehenden Ausführungsbeispiele Bezug genommen ist.

Beim vierten Ausführungsbeispiel ist der Druckfederkörper 24 aus zumindest einer Wickelfeder 35 gebildet, die auch Evolutfeder oder Topffeder genannt wird. Diese Wickelfeder 35 ist aus einem hochkant stehenden Flachmaterial oder Band 36 gewickelt. Im vorgespannten zusammengedrückten Zustand gemäß Fig. 7 liegen die einzelnen Bandwindungen zumindest im wesentlichen spiralig ineinander, wodurch die Federlänge etwa auf die Breite des Flachmaterials bzw. Bandes 36 verkürzt ist. In Fig. 7 und 8 ist die Wickelfeder 35 derart platziert, dass das im Durchmesser größere Ende 30 an der Trennscheibe 13 anliegt während das im entspannten Zustand untere, hinsichtlich des Durchmessers kleinere Ende 29 den Stiftansatz 23 des Abschaltkörpers 21 umfasst und axial am Kopf 22 anliegt. Auch bei dem ersten Ausführungsbeispiel gemäß Fig. 1 bis 3 ist die dortige Feder 25 in dieser Weise montiert. Dies hat den Vorteil, dass der Abschaltkörper 21 im Abschaltfall sicher und zuverlässig mittels der Feder 25 bzw. Wickelfeder 35 im Hinblick auf darauf einwirkende Querkräfte geführt und gehalten ist. Man erkennt, dass bei der Wickelfeder 35 gemäß Fig. 7 bis 9 durch das Ineinanderfedern des Bandes 36 ein äußerst kompakter Druckfederkörper 24 mit kleinstmöglicher Axiallänge bei großer Federkraft erreicht ist. Die Wickelfeder 35 zeichnet sich durch hohe Biegesteifigkeit aus, die eine sichere Führung des Abschaltkörpers 21 im entspannten Zustand gemäß Fig. 8 gewährleistet, da auch dann die Bandwindungen noch ineinander liegen und sich gegenseitig gegen Querkräfte abstützen. Die hohe Biegesteifigkeit ist von wesentlicher Bedeutung; denn während des Abschaltvorganges, wenn der Druckfederkörper 24 den Bürstenkörper 11 bereits abgehoben hat und der Stromkreis unterbrochen worden ist, trudelt der Elektromotor noch aus, wobei dieses Austrudeln bei ungebremsten Motoren im Leerlauf z. B. 5 bis 15 sec dauern kann. Während dieser Zeit wirken über den Kontakt des Abschaltkörpers 21 mit dem rotierenden Kommutator Querkräfte auf den Druckfederkörper 24, die ein Ausreißen des Abschaltkörpers 21 in Folge starker Schiefstellung bewirken könnten. Dem ist beim vierten Ausführungsbeispiel durch die Wickelfeder 35 mit hoher Biegesteifigkeit entgegengewirkt, durch die ein Ausreißen des Abschaltkörpers 21 durch beim Auslaufen des Elektromotors entstehende Querkräfte verhindert ist, da die einzelnen Bandwindungen der Wickelfeder 35 sich einer etwaigen stärkeren Schiefstellung aufgrund einwirkender Querkräfte entgegenstellen und die Wickelfeder 35 stabilisieren. Vorteilhaft ist ferner, dass ein derart gestalteter Druckfederkörper 24 einfach und kostengünstig ist und innerhalb des Hohlraums 12 einen geringen Platzbedarf hat. Durch das Eintauchen der kleinen Bandwindungen in die immer größer werdenden Bandwindungen der einfachkonisch gewickelten Wickelfeder 35 ergibt sich eine erhebliche Reduzierung der Baulänge im vorgespannten zusammengedrückten Zustand gemäß Fig. 7.

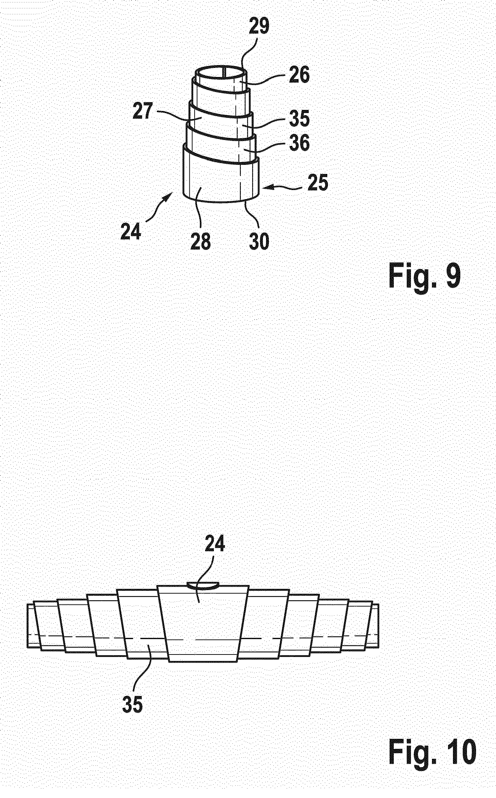

Bei dem in Fig. 10 gezeigten fünften Ausführungsbeispiel ist abweichend von Fig. 7 bis 9 die Wickelfeder 35 doppelkonisch ausgebildet. Diese Wickelfeder 35 wird derart im Hohlraum 12 angeordnet, dass sich ein konischer Teil in Fig. 7 und 8 nach oben hin verjüngt, während der andere konische Federteil sich nach unten in Richtung zum Abschaltkörper 21 verjüngt wie dies für die einfachkonische Wickelfeder 35 in Fig. 7 und 8 gezeigt ist.

Bei allen Ausführungsbeispielen ist der mindestens eine Druckfederkörper 24 aus Metall, insbesondere aus Federstahl, gebildet. Bei der Wahl des einzelnen Typus des Druckfederkörpers 24 kann auf zum Teil handelsübliche Bauteile zurückgegriffen werden, wodurch der Aufwand für den Druckfederkörper 24 gering ist.

## Patentansprüche

1. Kohlebürste (10) mit Abschaltvorrichtung (20),
die in einem Hohlraum (12) des Bürstenkörpers (11) einen aus elektrisch isolierendem Material bestehenden Abschaltkörper (21) und einen vorgespannten, den Abschaltkörper (21) federelastisch beaufschlagenden Druckfederktirper (24) aufweist, **dadurch gekennzeichnet, dass** der Druckfederkörper (24) zusammen mit dem Abschaltkörpers (21) als Kurzbauteil ausgebildet ist, indem der Druckfederkörper (24) aus zumindest einer Feder (25) mit mehreren Federwindungen (26, 27,28) gebildet ist, wobei diese Federwindungen (26 , 27, 28) zumindest im vorgespannten, zusammengedrückten Zustand zumindest teilweise ineinander liegen, wobei die kleinste Federwindung (26) in einer folgenden größeren Federwindung aufgenommen ist.

2. Kohlebürste nach Anspruch 1, **dadurch gekennzeichnet, dass** der Druckfederkörper (24) aus zumindest einer Feder (25; 35) mit mehreren Federwindungen (26 bis 28) gebildet ist, die zumindest im vorgespannten, zusammengedrückten Zustand unter Verkürzung zumindest teilweise ineinander liegen.

3. Kohlebürste nach Anspruch 2, **dadurch gekennzeichnet, dass** die Federwindungen (26 bis 28) in einer Axialrichtung abgestufte oder kontinuierlich abnehmende Durchmesser aufweisen, wobei zumindest teilweise die kleineren Federwindungen unter Verkürzung in den folgenden größeren Federwindungen aufgenommen sind.

4. Kohlebürste nach einem der Ansprüche 1 bis 3, **dadurch gekennzeichnet, dass** der Druckfederkörper (24) als Schraubenfeder mit konusförmig oder doppelkonusförmig gewickelten Federwindungen (26 bis28) ausgebildet ist.

5. Kohlebürste nach einem der Ansprüche 1 bis 3, **dadurch gekennzeichnet, dass** der Druckfederkörper (24) aus zumindest einer Wickelfeder (35), die aus einem hochkant stehenden Flachmaterial oder Band (36) gewickelt ist, gebildet ist, bei der im vorgespannten zusammengedrückten Zustand die Federwindungen (26 bis 28), insbesondere Bandwindungen, zumindest im wesentlichen spiralig ineinander liegen und die Federlänge etwa auf die Breite des Flachmaterials, insbesondere des Bandes (36), verkürzt ist.

6. Kohlebürste nach Anspruch 5, **dadurch gekennzeichnet, dass** die Wickelfeder (35) einfachkonisch oder doppelkonisch ist.

7. Kohlebürste nach einem der Ansprüche 1 bis 6, **dadurch gekennzeichnet, dass** der den Druckfederkörper (24) und den Abschaltkörper (21) enthaltende Hohlraum (12) am Ende über eine Trennscheibe (13) und anschließende Verstampfung (14) geschlossen ist, an der der Druckfederkörper (24) abgestützt ist.

8. Kohlebürste nach Anspruch 7, **dadurch gekennzeichnet, dass** der Hohlraum (12) am Ende im Bereich der Verstampfung (14) eine Aussparung (17) mit größerem Durchmesser als der Hohlraum (12) aufweist und dass in der Aussparung (17) die Trennscheibe (13) und die Verstampfung (14) mit vergrößerter Umfangsfläche und reduzierter axialer Dicke aufgenommen sind.

9. Kohlebürste nach Anspruch 7 oder 8, **dadurch gekennzeichnet, dass** die axialen Ende (29,30) des Druckfederkörpers (24) als ebenflächige Anlageflächen zur ebenen Anlage am Abschaltkörpers (21) am einen Ende und an der Trennscheibe (13) am anderen Ende ausgebildet sind.

10. Kohlebürste nach einem der Ansprüche 1 bis 9,
**dadurch gekennzeichnet,**
**dass** der Druckfederkörper (24) aus Metall, insbesondere aus Federstahl, gebildet ist.

## Claims

1. Carbon brush (10) with disconnection apparatus (20), which, in a cavity (12) in the brush body (11), has a disconnection body (21) consisting of electrically insulating material and a prestressed compression-spring body (24) which acts resiliently on the disconnection body (21), **characterized in that** the compression-spring body (24) is formed together with the disconnection body (21) as a short component, **in that** the compression-spring body (24) is formed from at least one spring (25) with a plurality of spring turns (26, 27, 28), wherein said spring turns (26, 27, 28), at least in the prestressed, compressed state, are located at least partly one inside the other, wherein the smallest spring turn (26) is accommodated in a following larger spring turn.

2. Carbon brush according to Claim 1, **characterized in that** the compression-spring body (24) is formed from at least one spring (25; 35) with a plurality of spring turns (26 to 28), which, at least in the prestressed, compressed state, are located at least partly one inside the other, shortening them.

3. Carbon brush according to Claim 2, **characterized in that** the spring turns (26 to 28) have stepped or continuously decreasing diameters in an axial direction, the smaller spring turns being at least to some extent accommodated in the following larger spring turns, shortening them.

4. Carbon brush according to one of Claims 1 to 3, **characterized in that** the compression-spring body (24) is formed as a helical spring with conically or double-conically wound spring turns (26 to 28).

5. Carbon brush according to one of Claims 1 to 3, **characterized in that** the compression-spring body (24) is formed from at least one wound spring (35) which is wound from a flat material or strip (36) standing on edge in which, in the prestressed compressed state, the spring turns (26 to 28), in particular the strip turns, are located at least substantially spirally one inside the other and the spring length is shortened approximately to the width of the flat material, in particular the strip (36).

6. Carbon brush according to Claim 5, **characterized in that** the wound spring (35) is single-conical or double-conical.

7. Carbon brush according to one of Claims 1 to 6, **characterized in that** the cavity (12) containing the compression-spring body (24) and the disconnection body (21) is closed at the end by a separating disk (13), and adjoining plug (14), on which the compression-spring body (24) is supported.

8. Carbon brush according to Claim 7, **characterized in that**, at the end in the area of the plug (14), the cavity (12) has a recess (17) with a larger diameter than the cavity (12), and **in that** the separating disk (13) and the plug (14) are accommodated in the recess (17) with an enlarged circumferential surface and reduced axial thickness.

9. Carbon brush according to Claim 7 or 8, **characterized in that** the axial ends (29, 30) of the compression-spring body (24) are formed as flat contact surfaces to make flat contact with the disconnection body (21) at one end and with the separating disk (13) at the other end.

10. Carbon brush according to one of Claims 1 to 9, **characterized in that** the compression-spring body (24) is formed from metal, in particular from spring steel.

## Revendications

1. Balai de charbon (10) avec dispositif de déconnexion (20), lequel possède dans un espace creux (12) du corps de balai (11) un corps de déconnexion (21) composé d'un matériau électriquement isolant et un corps de ressort presseur (24) précontraint qui soumet le corps de déconnexion (21) à une charge élastique, **caractérisé en ce que** le corps de ressort presseur (24), en association avec le corps de déconnexion (21), est réalisé sous la forme d'un composant court **en ce que** le corps de ressort presseur (24) est composé d'au moins un ressort (25) ayant plusieurs spires de ressort (26, 27, 28), ces spires de ressort (26, 27, 28), au moins dans l'état précontraint comprimé, se trouvant au moins partiellement les unes dans les autres, la spire de ressort la plus petite (26) étant accueillie dans une spire de ressort plus grande suivante.

2. Balai de charbon selon la revendication 1, **caractérisé en ce que** le corps de ressort presseur (24) est composé d'au moins un ressort (25 ; 35) ayant plusieurs spires de ressort (26 à 28), lesquelles se trouvent au moins partiellement les unes dans les autres en étant raccourcies, au moins dans l'état précontraint comprimé.

3. Balai de charbon selon la revendication 2, **caractérisé en ce que** les spires de ressort (26 à 28) possèdent, dans une direction axiale, des diamètres étagés ou qui diminuent continuellement, les spires de ressort les plus petites étant accueillies au moins partiellement dans les spires de ressort plus grandes suivantes en étant raccourcies.

4. Balai de charbon selon l'une des revendications 1 à 3, **caractérisé en ce que** le corps de ressort presseur (24) est réalisé sous la forme d'un ressort hélicoïdal aux spires de ressort (26 à 28) enroulées en forme de cône ou en forme de double cône.

5. Balai de charbon selon l'une des revendications 1 à 3, **caractérisé en ce que** le corps de ressort presseur (24) est constitué d'au moins un ressort spiral (35) qui est enroulé à partir d'un matériau plat posé sur chant ou une bande (36), avec lequel, dans l'état comprimé précontraint, les spires de ressort (26 à 28), notamment les spires en bande, reposent les unes à l'intérieur des autres au moins sensiblement en forme de spirale et la longueur du ressort est raccourcie approximativement à la largeur du matériau plat, notamment de la bande (36).

6. Balai de charbon selon la revendication 5, **caractérisé en ce que** le ressort spiral (35) est conique simple ou conique double.

7. Balai de charbon selon l'une des revendications 1 à 6, **caractérisé en ce que** l'espace creux (12) qui contient le corps de ressort presseur (24) et le corps de déconnexion (21) fermé à l'extrémité par le biais d'une plaque de séparation (13) et ensuite par un compactage (14) sur lequel s'appuie le corps de ressort presseur (24).

8. Balai de charbon selon la revendication 7, **caractérisé en ce que** l'espace creux (12) possède au niveau de l'extrémité, dans la zone du compactage (14), une cavité (17) ayant un diamètre supérieur à celui de l'espace creux (12) et **en ce que** la plaque de séparation (13) et le compactage (14) sont accueillis dans la cavité (17) avec une surface circonférentielle accrue et une épaisseur axiale réduite.

9. Balai de charbon selon la revendication 7 ou 8, **caractérisé en ce que** les extrémités axiales (29, 30) du corps de ressort presseur (24) sont réalisées sous la forme de surfaces d'appui planes destinées s'appuyer à plat sur le corps de déconnexion (21) au niveau d'une extrémité et sur la plaque de séparation (13) au niveau de l'autre extrémité.

10. Balai de charbon selon l'une des revendications 1 à 9, **caractérisé en ce que** le corps de ressort presseur (24) est formé de métal, notamment d'acier à ressort.
